# EUROPÄISCHE PATENTSCHRIFT

(11) **EP 1 389 010 B1**
(45) Veröffentlichungstag und Bekanntmachung des Hinweises auf die Patenterteilung: **15.10.2014**
(21) Anmeldenummer: 03017500.4
(22) Anmeldetag: 02.08.2003
(51) Int. Cl.: H04N 5/765, G11B 20/00

(54) **Gerätekombination aus zwei Aufzeichnungs- und/oder Wiedergabegeräten für verschlüsselte digitale Bild- und/oder Tonsignale**
Apparatus combination, comprising two encrypted digital image and/or sound signal recording and/or reproducing devices.
Combinaison d'appareils, comprenant deux dispositifs d'enregistrement et/ou de reproduction de signaux d'image et/ou de son numériques chiffrés.

(30) Priorität: 09.08.2002 DE 10236635
(43) Veröffentlichungstag der Anmeldung: 11.02.2004
(73) Patentinhaber: LOEWE Technologies GmbH, 96317 Kronach (DE)
(72) Erfinder: Hopf, Reinhold Dipl.-Ing. (FH), 96328 Küps (DE)
(74) Vertreter: Pröll, Jürgen

(56) Entgegenhaltungen:
- EP-A- 1 164 588
- EP-A- 1 220 217
- WO-A-02/47356
- WO-A1-01/86654
- US-A- 6 055 314
- ANONYMOUS: 'Pretty Good Privacy', [Online] Wikipedia Gefunden im Internet: <URL:https://en.wikipedia.org/wiki/Pretty_G ood_Privacy> [gefunden am 2013-06-03]
- MIKE IANNAMICO: 'Pretty Good Privacy, PGP for Personal Privacy, Version 5.0 User's Guide' USER'S GUIDE PGP 01 Januar 1997, Seite COMPLETE, XP002270873

## Beschreibung

Die Erfindung betrifft eine Gerätekombination aus mindestens einem ersten Aufzeichnungs- und/oder Wiedergabegerät für in einem ersten Datenformat verschlüsselte digitale Bild und/oder Tonsignale und in einem zweiten Datenformat verschlüsselte Bild- und/oder Tonsignale.

Es ist bekannt, Videorecorder zum Überspielen von einer Videokassette auf die andere miteinander über Kabel zu verbinden und die Übertragung der Video- und Audiosignale im gleichen Format vorzunehmen. Hierzu weisen beide Geräte externe Schnittstellen auf. Dieses Prinzip ist auch anwendbar zwischen Video- oder Ton-DVD-Geräten und digitalen Bandaufzeichnungsgeräten. Gleichsam kann auch eine Übertragung zwischen einer Festplatte und einer zweiten Festplatte in Geräten oder von einer Festplatte auf einen transportablen Datenträger im ersten oder zweiten Gerät erfolgen, welcher beispielsweise ein Aufzeichnungsband, eine wiederbeschreibbare CD oder auch ein einsteckbarer Massenspeicher sein kann. Es versteht sich dabei von selbst, dass die Geräte mit entsprechenden Handsteuerungen und Schreibleseköpfen ausgestattet sein müssen und die mechanischen Anordnungen entsprechend auszubilden sind.

Die Erfindung ist grundsätzlich auf kein Speichermedium und damit auf kein Gerät mit einem bestimmten Speichermedium für die Abspeicherung von digitalen Bild- und Tonsignalen beschränkt. Ebenso ist sie nicht beschränkt auf bestimmte Gerätetypen, wie transportable und nicht transportable Geräte. Die bekannten Geräte für digitale Aufzeichnung und Wiedergabe können unterschiedliche Datenformate aufweisen, die nicht von einem Gerät aufgezeichnet und von einem anderen abgespielt werden können. Diese Unterschiede sind beispielsweise bei hochkomprimiertem MP3 Standard und weniger hoch komprimierten DVD Standards gegeben. Andererseits ist es wünschenswert, dass gerade bei unterschiedlichen Standards eine Überspielung ebenfalls möglich ist und insbesondere solche Überspielungen auch einem Kopierschutz unterworfen werden. So sind DVD- Player grundsätzlich mit einem Kopierschutz ausgestattet, der es praktisch unmöglich macht, die DVD- Signale über eine externe Schnittstelle an ein Gerät anzuschließen, um auf einem Träger, wie Band-, Festplattenspeicher oder beschreibbare CD, eine unverschlüsselte Aufzeichnung einer digitalen Kopie vorzunehmen. Verschiedene Geräte haben ferner einen erhöhten Kopierschutz, so dass noch nicht einmal die überspielte Kopie bzw. die gespeicherten Daten ohne Verzerrungen sichtbar oder hörbar gemacht werden können.

In der DE 198 47 071 A1 ist ein bekanntes interaktives Multimedia-Card-Modul beschrieben, das ein anbieterspezifisches Conditional Access Modul (CAM) zur Programmentschlüsselung für das entsprechende Zugriffssystem "Conditional Access System (CAS)" und einen Einschub für eine personenspezifische Smart-Card für die Zugangsberechtigung aufweist. Physikalisch befindet sich das auf der DVB-Schnittstelle basierende CAM in einem PC-Card-Gehäuse vom Typ II mit 68 Pin-Anschlüssen. Diese Anschlüsse sind modifiziert ausgeführt, um die Verarbeitung von MPEG-Daten zu ermöglichen. Dabei wurde das PC-Card-Format zur Implementierung der DVB-Schnittstelle als kostengünstige, schnell arbeitende und flexible Schnittstelle eingesetzt. Ein solches Modul kann in Netzwerk-Computern, Fernsehern, PCs und Set-Top- Boxen eingesetzt werden. In derselben Schrift ist ferner ein mit einem interaktiven Multimedia-Card-Modul bestücktes Gerät angegeben. Mittels eines vom Gerät gelieferten Transportstroms ist es möglich, codierte Daten auf ein externes Speichermedium zu speichern. Als mögliche Anwendung eines Card-Moduls sind breitbandige Internet-Ankopplungen eines PC an TV-Kabel oder Satelliten und die drahtlose Übertragung von MPEG-Transportströmen zur Aufzeichnung bzw. Wiedergabe (down- bzw. upload) auf entsprechenden Geräten angegeben.

Aus der EP 1 164 588 A2 ist ein Informationsausgabegerät, insbesondere eine Set-Top Box, und ein Informationsspeichergerät, insbesondere ein DVD-Schreibgerät, bekannt. Das Informationsausgabegerät dekodiert ein kodiert vorliegendes digitales Informationssignal in ein deködiertes Audio-/Videosignal. Das Informationsausgabegerät ist datentechnisch mit dem Informationsspeichergerät verbunden. Das Informationsspeichergerät liest von einem eingelegten schreib-/lesbaren Speichermedium (DVD) eine individuelle Speichermedium-Kennung, die an das Informationsausgabegerät übertragen wird. Das Informationsausgabegerät verschlüsselt das dekodierte Audio-/Videosignal mit der Speichermedium-Kennung und überträgt dieses zum Informationsspeichergerät. Das verschlüsselte Audio-/Videosignal wird dann auf dem Speichermedium abgespeichert. Zur Wiedergabe wird das verschlüsselte Audio-/Videosignal mit der zuvor ausgelesenen Speichermedium-Kennung entschlüsselt.

Aus der EP 1 227 486 A 2 ist es bekannt, bei sogenannten Hard-Disk-Videorecordem und Personal Computern verschlüsselte AV-Signale im MPEG 2-Format oder entschlüsselt als codierte Daten im MPEG 1-Format zu konvertieren, um diese in diesem Format an andere Apparate zu übertragen. Diese Apparate können jedoch kein aufgezeichnetes Programm in ein anderes Format konvertieren. Aus derselben Schrift ist ferner eine Apparatur zum Speichern und Wiedergeben bekannt, die verschlüsselte Eingangssignale in codierte Datensignale umsetzt und diese speichert. Bei der Wiedergabe werden die codierten Daten wieder verschlüsselt, um dann nach einer Entschlüsselung wieder decodiert, angezeigt oder aufgezeichnet werden zu können.

Aus der DE 199 27 711 sind eine Vorrichtung für das Übertragen von Informationen über ein Netz und ein dafür geeignetes Verfahren beschrieben. Die von einem DVD-Abspielgerät abgegriffenen codierten Daten werden zur Verhinderung digitalen Kopierens verschlüsselt bzw. verwürfelt. Der entwürfelte Datenstrom ist ein Programmstrom, der in der MPEG-Norm beschrieben ist. Der Programmstrom umfasst ein Videopaket, das ein MPEG1- oder ein MPEG2-Format aufweist, ein Audiopaket, das ein MPEG-Format, ein Audio-Codierformat, z. B. AC 3, oder ein lineares Pulscode-Modulationsformat (PCM-Format) aufweist. Über die Ausgabeschnittstelle werden die verwürfelten MPEG2-Daten ausgegeben. Es findet ferner eine Formatumsetzung statt, um eine Anzeigevorrichtung betreiben zu können.

Aus der EP 1 164 588 A2 ist eine Gerätekombination bekannt, die aus mindestens einem ersten Aufzeichnungs- und/oder Wiedergabegerät für in einem ersten Datenformat verschlüsselte digitale Bild- und/oder Tonsignale und einem zweiten Aufzeichnungs- und/oder Wiedergabegerät für in einem zweiten Datenformat verschlüsselte Bild- und/oder Tonsignale besteht,
- wobei das erste Gerät die verschlüsselten Bild- und/ oder Tonsignale zumindest für die Wiedergabe dekodiert und die Daten unverschlüsselt an eine integrierte Wiedergabeeinrichtung zur visuellen und/oder akustischen Darstellung oder Darbietung oder an eine interne Schnittstelle abgibt,
- wobei das erste Gerät eine Schaltungsanordnung aufweist, die die unverschlüsselten Daten vor der Abgabe an eine externe Schnittstelle zum Anschließen des zweiten Gerätes mit einem vom zweiten Gerät verarbeitbaren Verschlüsselungsalgorithmus verschlüsselt,
- wobei mindestens im ersten Gerät ein Datenschlüssel abgespeichert ist, der für die Verschlüsselung der über die externe Ausgangsschnittstelle auszugebenden Daten heranziehbar ist.

Ausgehend vom dargestellten Stand der Technik liegt der Erfindung die Aufgabe zu Grunde, eine Gerätekombination anzugeben und so auszustatten, dass eine Überspielung von einem ersten Aufzeichnungs- und/oder Wiedergabegerät, das primär dazu bestimmt ist, verschlüsselte Daten zu entschlüsseln und die entschlüsselten Video- und Tonsignale wiederzugeben oder auf ein zweites Aufzeichnungs- und/oder Wiedergabegerät zu übertragen, also zu kopieren, ermöglicht wird, um mit diesem Gerät oder, falls es sich um einen transportablen Speicher handelt, wie beispielsweise Kartenspeicher für MP3-Player, die Daten von einem anderen systemgleichen Gerät wiedergeben zu können. Dabei sollen auch unterschiedliche Verschlüsselungsformate Berücksichtigung finden.

Gelöst wird die Aufgabe durch eine Gerätekombination, wie sie im Anspruch 1 angegeben ist.

Das erste Gerät ist also derartig ausgestattet, dass es zum einen für die visuelle und/oder akustische Darstellung und Darbietung die aufgezeichneten verschlüsselten Daten zu dekodieren vermag und zum anderen aber auch einen Coder aufweist, der unter Zuhilfenahme von Verwürfelungsalgorithmen bzw. Verschlüsselungsalgorithmen die unverschlüsselten Daten in ein Format umsetzt und verschlüsselt, das von dem zweiten angeschlossenen Aufzeichnungsgerät auch später verarbeitbar ist. Dies ermöglicht auch die Berücksichtigung eines höheren Kopierschutzes bzw. eine Identifizierung des die Kopie erstellenden Benutzers, wenn zusätzlich die Daten der kopierenden Person mit auf der Kopie aufgezeichnet bzw. in einem separaten Speicher des angeschlossenen zweiten Gerätes eingespeichert werden. Darüber hinaus sind ein erhöhter Kopierschutz und eine Überprüfung von Kopien, einschließlich der Person, durch Anwendung eines öffentlichen und privaten Schlüssels möglich, der beispielsweise von Trust-Centern im Rahmen der digitalen Signatur vergeben wird. Mit diesem Schlüssel können Verwürfelungen der Daten und auch der Algorithmen sowie die Entschlüsselung und Dekodierung vorgenommen werden. Solche Verschlüsselungssysteme bestehen aus zwei Schlüsseln, die miteinander erst den Algorithmus bilden, der mindestens für die Entschlüsselung mit symmetrischen Verfahren verschlüsselter Daten heranziehbar ist.

Die Erfindung kann z.B. angewendet werden zwischen einem DVD- Player, der ein reines Wiedergabe-Gerät ist, und einem zweiten Gerät, nämlich einem MP3- Player. Dadurch ist es möglich, die dekodierten DVD- Signale, zum Beispiel Tonsignale, hochkomprimiert im ersten Gerät umzusetzen und verschlüsselt im MP3- Format an das zweite Gerät zu übertragen und dort abzuspeichern. Selbiges ist auch beispielsweise zwischen CD- Playern oder digitalen Aufzeichnungsgeräten und WMA (Windows Media Audio)- Geräten oder WMV (Windows Media Video)- Geräten oder Geräten mit beliebigem anderen Codec möglich. In jedem Fall ist das erste Gerät so ausgestattet, dass es bereits die Verschlüsselungsalgorithmen bei der Neuverschlüsselung der dekodierten Signale berücksichtigt, um diese vom zweiten Gerät aufzeichnen lassen und verarbeiten zu können, um damit eine Wiedergabe mit dem zweiten Gerät oder mit einem daran angeschlossenen gleichen Gerät zu ermöglichen.

In weiterer Ausgestaltung kann auch vorgesehen sein, dass mit der Aufzeichnung im zweiten Gerät ein Datum, das hier synonym für diverse Informationsdaten steht, aufgezeichnet wird. Diese Informationsdaten können die zeitlichen Generierungsdaten beinhalten, wann die Aufzeichnung begonnen und beendet worden ist, und zwar auch tagesgenau. Sie kann ferner den Titel des Beitrages oder sonstige Informationen zu dem Beitrag, der übertragen wird, beinhalten. Es können aber auch Daten zur Person oder zum Gerät mitübertragen werden. Bei Verwendung eines von einem Trust-Center vergebenen Private-Codes wird durch Einführen einer Chip Karte in einen Kartenleser, der mit dem ersten Gerät verbunden oder in einem solchen integriert ist, sofort sicher gestellt, dass die Persönlichkeitsdaten für die Verschlüsselung einerseits, aber auch für die Identifizierung des Kopierenden andererseits herangezogen werden. Darüber hinaus sieht die Erfindung auch vor, dass solche Angaben zur Person mit eingegeben werden können. Es versteht sich von selbst, dass ein Programm vorgesehen sein kann, um die personenbezogenen Daten eingeben zu können, sofern diese nicht von einem Speicher abrufbar sind. Dieses Programm kann die Übertragung auch sperren, wenn keine Berechtigung besteht oder die Daten nicht eingegeben werden. Auch ist eine Registrierung der durchgeführten Aufzeichnungen möglich. Es ist für jedermann ersichtlich, dass dann, wenn solche Daten automatisch mitübertragen werden, auch jede Kopie identifizierbar ist und auch unter Umständen der Kopierende, so dass selbst bei der Fertigung von Mehrfachkopien, bei denen das zweite Gerät wiederum das erste Gerät oder ein entsprechendes äquivalentes Gerät ist, das das erste Gerät ist, und auf ein anderes Gerät überspielt wird, auch dies verfolgbar ist und der kopierenden Person zugeordnet werden kann. Es ist also ein wirksamer Kopierschutz zugleich gegeben, da das Auslesen der Kopie immer nur mit bestimmten Geräten oder unter Anwendung eines privaten Schlüssels oder eines bestimmten Verschlüsselungsalgorithmus der Person durchgeführt werden kann.

Um die Verschlüsselung beim Kopieren auch automatisieren zu können, ist vorgesehen, dass in dem ersten Gerät ein Datenschlüssel abgespeichert ist, der für die Verwürfelung der über die externe Ausgangsschnittstelle auszugebenden Daten heranziehbar ist. Dieser Datenschlüssel wird also zusammen mit dem verwürfelten Inhalt nach dem Schlüsselformat des zweiten Gerätes verschlüsselt mitübertragen. Im zweiten Gerät ist eine Schaltungsanordnung, nämlich ein Mikroprozessor, enthalten, dies gilt gleichermaßen auch für das erste Gerät, über welches die ganzen Verwürfelungen und Steuerungen vorgenommen werden, das wiederum den Datenschlüssel aus den empfangenen Daten direkt oder aber auch aus den verschlüsselt aufgezeichneten Daten extrahiert, um diesen Datenschlüssel dann dem Dekoder bereit zu stellen, der unter Verwendung des Datenschlüssels die Verschlüsselungen rückgängig macht, um die aufgezeichneten Informationen unverfälscht mit einem Bildschirm oder einem Lautsprecher nach erfolgter Signalbearbeitung wiedergeben zu können. Der Datenschlüssel kann ein sogenannter symmetrischer Schlüssel sein. Dieser kann selbst auch wiederum verschlüsselt übertragen werden, so dass er tatsächlich nur für den Berechtigten zugänglich ist. Die Übertragung solcher Datenschlüssel erfolgt in der Regel geschützt durch ein asymmetrisches Verfahren, um einen erhöhten Schutz zu erreichen. Im Gegensatz dazu können die Informationsdaten symmetrisch übertragen werden.

Am einfachsten sind Geräte der Gerätekombination zu bedienen, wenn die Datenschlüssel auf Chipkarten gespeichert sind, wie sie die Trust- Center ausgeben, und sowohl Public- Codes als auch Private- Codes für die Verschlüsselung beim Kopieren einer Aufzeichnung von einem ersten Gerät auf das zweite Gerät enthalten. Die Datenschlüssel können selbstverständlich aber auch dann, wenn eine entsprechende Tastatur oder eine Fernbedienung zu den Geräten vorhanden ist, die eine Eingabe ermöglicht, hierüber eingeben werden. Zur erleichterten Eingabe sollten die Geräte auch ein Display aufweisen, auf dem die Bedienungsfunktion während des Eingebens dargestellt wird. Die einzelnen Kombinationen und vorteilhafte Ausgestaltungen der Gerätekombination sind in den Unteransprüchen im einzelnen angegeben.

Wenn beispielsweise ein CD/DVD- Player über die Möglichkeit verfügt, während des Abspielens eines Musikstücks dieses gleichzeitig in einem bestimmten Format, beispielsweise im MP3 Format oder WMA- Format, zu komprimieren, so ist es möglich, mittels eines angeschlossenen MP3- oder WMA- Gerätes eine Überspielung vorzunehmen. Als besonders vorteilhaft hat es sich dabei erwiesen, wenn die beiden verbundenen Geräte miteinander kommunizieren und dabei das zweite Gerät dem ersten Gerät mitteilt, in welchem Format die Aufzeichnung gehandhabt wird, um den entsprechenden Schlüssel übertragen zu können. Der Verschlüsselungsalgorithmus kann auch vom zweiten Gerät an das erste übertragen und von einem programmierbaren Coder verwendet werden. Selbstverständlich sollte der CD- oder DVD- Player auch eine Auswahlmöglichkeit der zu bearbeitenden Musikstücke oder bei Bildaufzeichnungen der entsprechenden Bildstücke aufweisen, um die ausgewählte Übertragung vornehmen zu können. Dies ist Stand der Technik und den entsprechenden Geräten eigen. Die Übertragung kann auf einen einsteckbaren Massenspeicher oder aber auch über eine USB-Schnittstelle an ein digitales Gerät erfolgen. Das zweite Gerät kann also bei entsprechender Ausbildung des ersten Gerätes mit in diesem integriert sein. Das zweite Gerät sei nachfolgend als mobiles Gerät bezeichnet. Jedes mobile Gerät besitzt zusätzlich einen Speicher z. B. in Form einer Chipkarte, in der der Private- und der Public-Key als Beispiel für die Verschlüsselung abgelegt sind. Dabei sollte der Private-Key nur dem mobilen Player bekannt sein. Der Public-Key wird dem ersten Gerät, nämlich dem DVD- oder CD-Player, über eine entsprechende Kommunikationsverbindung oder im einfachsten Fall mittels Menü-Eingabe oder Chipkarte bekannt gemacht. Für jede neue Beschreibung des Massenspeichers generiert der DVD- bzw. CD-Playerdurch ein eingeschriebenes Programm mittels dem vorhandenen Mikroprozessor einen sogenannten Session-Key. Dieser Session-Key wird für die Verschlüsselung der Musikstücke mit einem gängigen Verfahren (z.B. Triple-DES-Verfahren) genutzt. Nach Abschluss der Verschlüsselung wird dieser Key mit einem asymmetrischen Verschlüsselungsverfahren (z.B. RSA) verschlüsselt und mit auf das Speichermedium geschrieben. Alle Vorgänge zur Verschlüsselung der Video- und Audiodaten laufen intern im Gerät ab.

Der angeschlossene mobile Player entschlüsselt vor dem Abspielen diesen Key und behält diesen während des Abspielvorgangs in einem Speicher. Mit Hilfe des Session-Keys wird dann die Dekodierung der aufgezeichneten Video- oder Tonsignale vorgenommen. Komprimierte und verschlüsselte Daten können somit nur mit dem Gerät abgespielt werden, das über den zum Public-Key gehörenden Private-Key verfügt. Bereits im MP3-Format vorliegende Musikstücke bleiben von dem Verfahren unberührt und können auf dem Player abgespielt werden.

Mit der Nutzung eines asymmetrischen Verschlüsselungsverfahrens kann Auch eine eindeutige Authentisierung des Nutzers vorgenommen werden. Voraussetzung hierfür ist eine entsprechende Public-Key-Infrastruktur verbunden mit der Onlinefähigkeit der Geräte, um den Public-Key abrufen zu können, oder der Besitz einer Chipkarte. Auf dieser Grundlage ist es möglich, beispielsweise ein Profil im Hinblick auf die musikalischen Vorlieben eines Benutzers zu erstellen und das erste Gerät als Empfangsgerät für verschlüsselte Video- oder Audiobeiträge zu nutzen. Diese können dann online empfangen und an das zweite Gerät, das ein reines Aufzeichnungs- und Wiedergabegerät ist, übertragen werden.

An einem Beispiel einer Kombination eines DVD-Players und einem MP3-Player bzw. einer MP3-Speicherkarte für Audiosignale sei die Erfindung nachfolgend erläutert.
1. Das DVD Gerät generiert einen Session- Key für ein symmetrisches Verfahren zur Übertragung der Audio- Daten.
2. Der DVD- Player generiert verschlüsselte Audio- Daten im MP3- Format mit symmetrischem Key.
3. Die Audio-Daten werden auf den MP3 - Player bzw. eine MP3-Speicherkarte verschlüsselt übertragen.
4. Das DVD- Gerät verschlüsselt zum erhöhten Kopierschutz den Session-Key mit dem Public- Key mittels asymmetrischem Verfahren und vermerkt Datum und Uhrzeit der Generierung des Audio- Files, der durch diese Signatur geschützt ist. Hierzu wird dem DVD- Player der Public- Key bekannt gemacht, der beispielsweise über einen Online- Anschlussabgefragt oder aber auch manuell mittels Tastatur eingegeben werden kann. Der angeschlossene MP3- Player hingegen besitzt und kennt sowohl den Private- als auch den Public- Key und vermag deshalb hieraus den Session-Key zurückzugewinnen.
5. In diesem Schritt wird zunächst der verschlüsselte Session- Key auf den angeschlossenen MP3- Player übertragen.
6. Der MP3- Player entschlüsselt mit dem Private- Key den,Session- Key, um diesen für die Entwürfelung verwenden zu können.
7. Mit dem Session- Key werden sodann bei der Wiedergabe die Musikstücke entschlüsselt.

## Patentansprüche

1. Gerätekombination aus mindestens einem ersten Aufzeichnungs- und/oder Wiedergabegerät für in einem ersten Datenformat verschlüsselte digitale Bild- und/oder Tonsignale und einem zweiten Aufzeichnungs- und/oder Wiedergabegerät für in einem zweiten Datenformat verschlüsselte Bild- und/oder Tonsignale,
- wobei das erste Gerät die verschlüsselten Bild- und/ oder Tonsignale zumindest für die Wiedergabe dekodiert und die Daten unverschlüsselt an eine integrierte Wiedergabeeinrichtung zur visuellen und/oder akustischen Darstellung oder Darbietung oder an eine interne Schnittstelle abgibt,
- wobei das erste Gerät eine Schaltungsanordnung aufweist, die die unverschlüsselten Daten vor der Abgabe an eine externe Schnittstelle zum Anschließen des zweiten Gerätes mit einem vom zweiten Gerät verarbeitbaren Verschlüsselungsalgorithmus verschlüsselt,
- wobei mindestens im ersten Gerät ein öffentlicher Datenschlüssel abgespeichert ist, der für die Verschlüsselung der über die externe Ausgangsschnittstelle auszugebenden Daten heranziehbar ist,
**dadurch gekennzeichnet,**
- **dass** die Schaltungsanordnung des ersten Gerätes einen Nutz-Datenschlüssel zur eigentlichen Dekodierung der Bild- und Audiodaten gemäß dem öffentlichen Datenschlüssel verschlüsselt und in verschlüsselter Form an das zweite Gerät übermittelt,
- **dass** im zweiten Gerät eine Schaltungsanordnung vorgesehen ist, die anhand eines mit dem öffentlichen Datenschlüssel korrespondierenden privaten Datenschlüssels den Nutz-Datenschlüssel aus den vom ersten Aufzeichnungs- und/oder Wiedergabegerät empfangenen Daten extrahiert und den Nutz-Datenschlüssel für die Dekodierung der verschlüsselten Daten dem Decoder bereitstellt.

2. Gerätekombination nach Anspruch 1, **dadurch gekennzeichnet, dass** das erste Gerät ein CD- oder DVD-Player ist.

3. Gerätekombination nach Anspruch 1 oder 2, **dadurch gekennzeichnet, dass** das zweite Gerät ein mit einem beliebigen Audio-/Videocodec arbeitendes Aufzeichnungs- und/oder Wiedergabegerät ist.

4. Gerätekombination nach Anspruch 1, 2 oder 3, **dadurch gekennzeichnet, dass** mit der Aufzeichnung durch das zweite Gerät ein Datum auf dem Speichermedium oder in einem separaten Speicher speicherbar ist, das mindestens zeitliche Generierungsdaten und/oder Informationsdaten zum gespeicherten Beitrag und/oder Daten zur Person des Kopierenden enthält.

5. Gerätekombination nach einem der obigen Ansprüche, **dadurch gekennzeichnet, dass** der Nutz-Datenschlüssel auf dem Speichermedium oder in einem separaten Speicher im zweiten Gerät gespeichert wird.

6. Gerätekombination nach einem der obigen Ansprüche, **dadurch gekennzeichnet, dass** der öffentliche Datenschlüssel über eine Kommunikationsschnittstelle oder mittels einer Chipkarte vom ersten Gerät von einem Anbieterrechner abrufbar und/oder durch eine Menü-Eingabe für die Verschlüsselung eingebbar ist.

7. Gerätekombination nach Anspruch 6, **dadurch gekennzeichnet, dass** sich der private Datenschlüssel auf einer Chipkarte befindet und mindestens das zweite Gerät einen Chipkartenleser aufweist oder mit einem solchen verbunden ist.

8. Gerätekombination nach einem der obigen Ansprüche, **dadurch gekennzeichnet, dass** der Nutz-Datenschlüssel ein symmetrischer Datenschlüssel ist.

## Claims

1. Apparatus combination consisting of at least one first recording and/or reproducing apparatus for digital image and/or sound signals encoded in a first data format and second recording and/or reproducing apparatus for image and/or sound signals encoded in a second data format,
- wherein the first apparatus decodes the encoded image and/or sound signals at least for reproduction and the data is delivered in uncoded form to an integrated reproducing device for visual and/or acoustic representation or presentation or to an internal interface,
- wherein the first apparatus has a circuit arrangement which prior to delivery to an external interface for connection of the second apparatus encodes the decoded data by an encoding algorithm able to be processed by the second apparatus, and
- wherein a public data key, which can be utilised for encoding the data to be output by way of the external output interface, is stored at least in the first apparatus,
**characterised in that**
- the circuit arrangement of the first apparatus encodes a useful data key for the actual decoding of the image and audio data in accordance with the public data key and communicates it in encoded form to the second apparatus, and
- provided in the second apparatus is a circuit arrangement which by way of a private data key corresponding with the public data key extracts the useful data key from the data received from the first recording and/or reproducing apparatus and provides the useful data key to the decoder for decoding of the encoded data.

2. Apparatus combination according to claim 1, **characterised in that** the first apparatus is a CD player or DVD player.

3. Apparatus combination according to claim 1 or 2, **characterised in that** the second apparatus is a recording and/or reproducing apparatus operating with any desired audio/video codec.

4. Apparatus combination according to claim 1, 2 or 3, **characterised in that** together with the recording by the second apparatus a datum can be stored on the storage medium or in a separate memory, which contains at least time generation data and/or information data with respect to the stored program and/or data with respect to the person who is copying.

5. Apparatus combination according to any one of the preceding claims, **characterised in that** the useful data key is stored on the storage medium or in a separate memory in the second apparatus.

6. Apparatus combination according to any one of the preceding claims, **characterised in that** the public data key can be called up by way of a communications interface or by means of a chipcard from the first apparatus by a service computer and/or can be input by way of a menu input for the encoding.

7. Apparatus combination according to claim 6, **characterised in that** the private data key is on a chipcard and at least the second apparatus comprises a chipcard reader or is connected with such.

8. Apparatus combination according to any one of the preceding claims, **characterised in that** the useful data key is a symmetrical data key.

## Revendications

1. Combinaison d'appareils faite d'au moins un premier dispositif d'enregistrement et/ou un dispositif de reproduction de signaux d'image et/ou de son numériques chiffrés dans un premier format de données et d'un second dispositif d'enregistrement et/ou de reproduction pour des signaux d'image chiffrés et/ou de son chiffrés dans un second format de données,
- le premier dispositif décodant les signaux d'image et/ou de son numériques chiffrés au moins pour la reproduction et transmettant les données de manière non chiffrée à un dispositif intégré de reproduction pour la présentation visuelle et/ou acoustique ou à une présentation ou à une interface interne,
- le premier dispositif présentant un ordre de commutation qui chiffre les données non chiffrées avant leur transmission à une interface externe pour le branchement du second dispositif avec un algorithme de chiffrage pouvant être traité par le second dispositif,
- une clé publique de données étant au moins enregistrée dans le premier dispositif et pouvant être utilisée pour le chiffrage des données à transmettre via l'interface externe de sortie,
caractérisée en cela que,
- l'ordre de commutation du premier dispositif chiffre une clé de données d'utilisation pour le décodage réel des données d'image et de son en respect de la clé publique de données et les transmet sous forme chiffrée au second dispositif,
- que dans le second dispositif, un ordre de commutation est prévu qui, à l'aide d'une clé privée de données correspondant à la clé publique de données, extrait la clé de données d'utilisation à partir des données reçues par le premier dispositif d'enregistrement et/ou de reproduction et met à la disposition du décodeur la clé de données d'utilisation pour le décodage des données chiffrées.

2. Combinaison d'appareils selon la revendication 1 caractérisée en cela que le premier dispositif est un lecteur CD ou DVD.

3. Combinaison d'appareils selon la revendication 1 ou 2 caractérisée en cela que le second dispositif est un dispositif d'enregistrement et/ou de reproduction travaillant avec un codec audio/vidéo au choix.

4. Combinaison d'appareils selon la revendication 1, 2 ou 3 caractérisée en cela qu'avec l'enregistrement par le second dispositif, une date peut être enregistrée sur le média d'enregistrement ou dans une mémoire séparée qui contient au moins les données temporelles de génération et/ou les informations sur la piste enregistrée et/ou les données personnelles du copieur.

5. Combinaison d'appareils selon l'une des revendications précédentes caractérisée en cela que la clé de données d'utilisation est enregistrée sur le média d'enregistrement ou dans une mémoire séparée dans un second dispositif.

6. Combinaison d'appareils selon l'une des revendications précédentes caractérisée en cela que la clé publique de données peut être consultée avec une interface de communication ou à l'aide d'une carte à puce depuis le premier dispositif par l'ordinateur du fournisseur et/ou qu'elle peut être saisie par la saisie du menu pour le chiffrage.

7. Combinaison d'appareils selon la revendication 6 caractérisée en cela que la clé privée de données se trouve sur une carte à puce et qu'au moins le second dispositif présente ou est relié à un lecteur de carte à puces.

8. Combinaison d'appareils selon l'une des revendications précédentes caractérisée en cela que la clé de données d'utilisation est une clé symétrique de données.
